# EUROPÄISCHE PATENTSCHRIFT

(11) **EP 3 224 060 B1**
(45) Veröffentlichungstag und Bekanntmachung des Hinweises auf die Patenterteilung: **10.10.2018**
(21) Anmeldenummer: 15752990.0
(22) Anmeldetag: 10.08.2015
(51) Int. Cl.: B60C 11/03, B60C 11/13

(54) **FAHRZEUGLUFTREIFEN**
VEHICLE TYRE
PNEUMATIQUE DE VÉHICULE

(30) Priorität: 25.11.2014 DE 102014224027
(43) Veröffentlichungstag der Anmeldung: 04.10.2017
(73) Patentinhaber: Continental Reifen Deutschland GmbH, 30165 Hannover (DE)
(72) Erfinder: BEHR, Ulrich, 30167 Hannover (DE); FISCHER, Markus, 30823 Garbsen (DE); FRIES, Volkmar, 30900 Wedemark (DE); WIES, Burkhard, 30455 Hannover (DE)
(74) Vertreter: Finger, Karsten
(86) Internationale Anmeldenummer: PCT/EP2015/068322
(87) Internationale Veröffentlichungsnummer: WO 2016/082945

(56) Entgegenhaltungen:
- EP-A1- 0 681 930
- WO-A1-2010/070690
- DE-U1-202011 003 868

## Beschreibung

Die Erfindung betrifft einen Fahrzeugluftreifen in Radialbauart mit einem asymmetrischen Laufstreifen mit einer der Fahrzeugaußenseite zugeordneten Außenschulter und einer der Fahrzeuginnenseite zugeordneten Innenschulter, ferner mit Profilpositiven, wie Profilblockreihen oder Profilbändern, sowie mit zumindest einer Umfangsrille, welche an der Laufstreifenoberfläche eine in axialer Richtung zwischen ihren Randkanten ermittelte Breite aufweist, wobei jede Umfangsrille von einer ersten, der Außenschulter näher befindlichen Rillenflanke, welche unter einem ersten Winkel von 5° bis 20° zur radialen Richtung verläuft, einer zweiten, der Innenschulter näher befindlichen Rillenflanke, welche unter einem gegenüber dem ersten Winkel kleineren zweiten Winkel von 0° bis 15° zur radialen Richtung verläuft, sowie einem die Rillenflanken verbindenden Rillengrund begrenzt ist, wobei der Rillengrund einen zentralen Abschnitt aufweist, welcher, im Querschnitt betrachtet, entlang eines Kreisbogens gekrümmt ist.

Es ist bekannt, dass am Rillengrund von Umfangsrillen in Laufstreifen von Fahrzeugluftreifen während des Betriebes infolge der stattfindenden Verformungen hohe Zugspannungen auftreten. Durch diese Zugspannungen sind Rillengründe anfällig für das Auftreten von Alterungsrissen und sogenannten "Groove Cracks". Alterungsrisse sind, im Allgemeinen in einer Vielzahl auftretende, parallel zueinander verlaufende Risse geringer Tiefe. Unter "Groove Cracks" werden Risse größerer Tiefe verstanden. Insbesondere bei Hochgeschwindigkeitsreifen sind die in Umfangsrillen von benachbarten Profilelementen, wie beispielsweise Profilrippen oder Blockreihen, eingeleiteten Spannungen bei hohen Fahrgeschwindigkeiten besonders groß. "Groove Cracks" und Alterungsrisse können einzeln oder in Kombination miteinander auftreten sowie auch ineinander übergehen. So bewirken entstandene Alterungsrisse oft eine nachfolgende Bildung von "Groove Cracks".

Vor allem an Ecken und Kanten innerhalb der Umfangsrillen können durch die im Betrieb des Reifens entstehenden hohen Spannungsspitzen solche Risse auftreten.

Ein Fahrzeugluftreifen der eingangs genannten Art ist beispielsweise aus der DE 20 2011 003 868 U1 bekannt. Der Laufstreifen dieses Reifens weist zumindest eine Umfangsrille mit einer ersten, der Reifenaußenschulter näher befindlichen Rillenflanke und einer zweiten der Reifeninnenschulter näher befindlichen Rillenflanke auf. Die erste Rillenflanke verläuft zur radialen Richtung unter einem ersten Winkel von 4° bis 7°, die zweite Rillenflanke verläuft zur radialen Richtung unter einem zweiten Winkel von 3° bis 8°. Der Rillengrund ist, im Querschnitt betrachtet, entlang eines Kreisbogens gekrümmt. Derart ausgeführte Umfangsrillen sollen eine geringe Rissanfälligkeit im Bereich des Rillengrundes aufweisen.

Aus der EP 2 119 574 B1 ist ein weiterer Fahrzeugluftreifen mit einem Laufstreifen mit Umfangsrillen bekannt. Die im Laufstreifen dieses Reifens verlaufenden Umfangsrillen sind durch einen Rillengrund und zwei Rillenflanken begrenzt, die unter unterschiedlichen Winkeln zur radialen Richtung verlaufen, wobei die eine Rillenflanke näher zur Reifenaußenschulter und die andere näher zur Reifeninnenschulter verläuft. Der Rillengrund setzt sich aus einem zentralen Abschnitt und zwei Übergangsabschnitten zu den Rillenflanken zusammen. Der zentrale Abschnitt des Rillengrundes ist geradlinig ausgeführt und weist ein in axialer Richtung ermitteltes Erstreckungsausmaß von bis zu 16 mm auf. Der an die näher zur Reifeninnenschulter befindlichen Rillenflanke anschließende Übergangsabschnitt ist entlang eines Kreisbogens gekrümmt. Der andere Übergangsabschnitt ist als Schrägfläche ausgeführt, die unter einem spitzen Winkel zur radialen Richtung verläuft. Derartige Umfangsrillen sollen Fahrzeugluftreifen, insbesondere auch Hochgeschwindigkeitsreifen, gute Handling- und Aquaplaningeigenschaften verleihen.

Aus der DE 36 19 149 A1 ist ein Fahrzeugluftreifen bekannt, dessen Laufstreifen zumindest eine in ihrem Rillengrund gekrümmte Rille aufweist, wobei die Rille, im Querschnitt betrachtet, zu einer durch ihren tiefsten Punkt (Rillenscheitel) gehenden und in radialer Richtung verlaufenden geraden Linie symmetrisch oder asymmetrisch ausgeführt sein kann. Wird der Rillengrund durch diese Linie als in zwei Hälften geteilt betrachtet, setzt sich jede Hälfte im Querschnitt aus drei Kreisbögen unterschiedlicher Radien sowie einem geraden Abschnitt zwischen den zwei näher zum Rillenscheitel befindlichen Kreisbögen zusammen. Die Radien der den Kreisbögen zugrundeliegenden Kreise nehmen hierbei vom Scheitelpunkt zu den Rillenflanken der Rille ab. In derart ausgeführten Rillen sollen die maximal auftretenden Spannungen verringert sein.

Die EP 0 681 930 A1 offenbart einen weiteren Fahrzeugluftreifen mit einem Laufstreifen mit Umfangsrillen. Die Rillenflanken der Umfangsrillen sind an ihren radial äußeren Endbereichen im Wesentlichen in Umfangsrichtung ausgerichtet und über ihre Umfangserstreckung aus in axialer Richtung zueinander versetzten Abschnitten gebildet. Die versetzten Abschnitte sollen an der Laufstreifenoberfläche Querkanten zur Verfügung stellen, welche die Traktionseigenschaften auf Schnee verbessern sollen. Der Reifen soll ferner gute Nassgriffeigenschaften aufweisen.

Ferner ist aus der WO 2010 070 690 A1 ein Fahrzeugluftreifen mit einem Laufstreifen mit Umfangsrillen mit am Rillengrund als Steinauswerfer wirkenden, beidseitig der Mittellinie des Rillengrundes angeordneten Erhebungen.

Die bekannten Lösungsvorschläge zur Verminderung der Rissanfälligkeit des Rillengrundes von Umfangsrillen sind nach wie vor verbesserungswürdig. Es besteht daher der Wunsch nach einer Rillengeometrie, bei der die oben angesprochenen Risse, insbesondere bei Hochgeschwindigkeitsreifen, nicht mehr bzw. weitgehend nicht mehr auftreten. Der Erfindung liegt daher die Aufgabe zu Grunde, im Laufstreifen verlaufende Umfangsrillen entsprechend zu gestalten.

Gelöst wird die gestellte Aufgabe erfindungsgemäß dadurch, dass der Radius des Kreisbogens, entlang welchem der zentrale Abschnitt des Rillengrundes gekrümmt ist, dem Zwei- bis Sechsfachen der Breite der Umfangsrille entspricht und dass der Rillengrund je einen Übergangsabschnitt zu den Rillenflanken aufweist.

In einer erfindungsgemäß ausgeführten Umfangsrille werden die von benachbarten Profilpositiven in die Umfangsrille eingeleiteten Spannungen besonders gleichmäßig über den gesamten Rillengrund verteilt, sodass das Auftreten von "Groove Cracks" auch beim Fahren mit hohen Geschwindigkeiten weitgehend verhindert wird.

Bei einer bevorzugten Ausführungsform der Erfindung entspricht der Radius des Kreisbogens, entlang welchem der zentrale Abschnitt des Rillengrundes gekrümmt ist, dem Drei- bis Fünffachen der Breite der Umfangsrille. Eine derartige Ausführung unterstützt besonders wirksam die der Außenschulter näher befindliche Rillenflanke, wo besonders hohe Spannungen eingeleitet werden.

Besonders vorteilhaft ist ferner eine Ausführungsvariante, bei der der zur ersten, der Außenschulter näher befindlichen Rillenflanke verlaufende Übergangsabschnitt, im Querschnitt betrachtet, entlang eines Kreisbogens mit einem Radius von 4,0 mm bis 7,0 mm, insbesondere von 5,0 mm bis 6,0 mm, gekrümmt ist. Bei einer weiteren, alternativen Ausführungsvariante ist der zur ersten, der Außenschulter näher befindlichen Rillenflanke verlaufende Übergangsabschnitt eine ebene Schrägfläche, welche, im Querschnitt betrachtet, unter einem Winkel von 35° bis 55°, insbesondere von 40° bis 50°, zur radialen Richtung verläuft. Beide Ausführungsvarianten ermöglichen eine Optimierung der Querabstützung der dieser Rillenflanke benachbarten Profilrippe oder Profilblockreihe.

Bevorzugt ist ferner eine Ausführungsform der Erfindung, bei der der zur zweiten, der Innenschulter näher befindlichen Rillenflanke verlaufende Übergangsabschnitt, im Querschnitt betrachtet, entlang eines Kreisbogens mit einem Radius von 2,0 mm bis 4,0 mm, insbesondere von 2,5 mm bis 3,5 mm, gekrümmt ist. Diese Maßnahme ist für eine möglichst große Querschnittsfläche und damit für das Wasserableitvermögen der Umfangsrille von Vorteil.

In diesem Zusammenhang ist es ferner günstig, wenn die erste, zur Außenschulter näher befindliche Rillenflanke bis in eine von der Laufstreifenoberfläche in radialer Richtung ermittelte Tiefe reicht, welche 40 % bis 70 % der Profiltiefe, insbesondere 50 % bis 60 % der Profiltiefe, entspricht.

Die Breite der Umfangsrille wird vorzugsweise, vor allem bei Reifen, die für hohe Geschwindigkeiten ausgelegt sind, zwischen 8,0 mm bis 12,0 mm gewählt.

Weitere Merkmale, Vorteile und Einzelheiten der Erfindung werden nun anhand der Zeichnung, die schematisch zwei Ausführungsbeispiele der Erfindung darstellt, näher beschrieben. Dabei zeigen

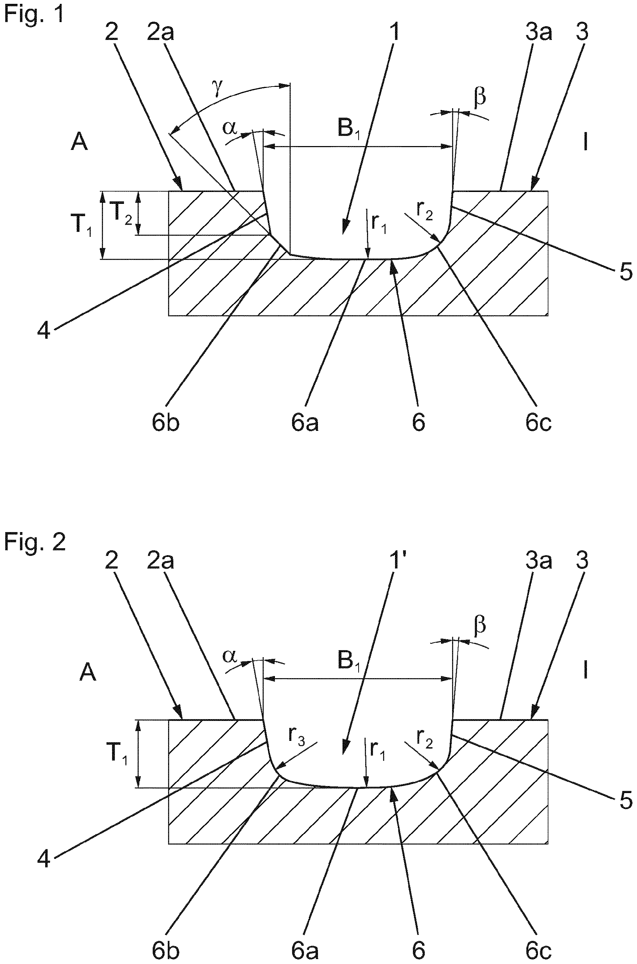

Fig. 1 und Fig. 2 je einen Querschnitt durch eine in Umfangsrichtung umlaufende Rille im Laufstreifen eines Fahrzeugluftreifens mit unterschiedlichen Ausführungsvarianten der Erfindung.

Die Erfindung befasst sich mit speziell ausgestalteten Umfangsrillen in asymmetrisch ausgelegten Laufstreifen, wobei diese Umfangsrillen die Hauptentwässerungsrillen sind und innerhalb der Bodenaufstandsfläche eines Laufstreifens sowohl in schulterseitigen Laufstreifenbereichen als auch im mittleren Laufstreifenbereich von Fahrzeugluftreifen in Radialbauart, insbesondere für Personenkraftwagen, Vans, SUVs und dergleichen, angeordnet sein können. Wie an sich bekannt, gliedern Umfangsrillen den Laufstreifen in Profilrippen, Blockreihen und dergleichen und können als gerade in Umfangsrichtung umlaufende Rillen, als zick-zack-förmig in Umfangsrichtung verlaufende Rillen oder als abschnittsweise zur Umfangsrichtung unter einem spitzen Winkel ≤ 45° verlaufende Rillen ausgeführt sein.

Fahrzeugluftreifen, deren Laufstreifen zumindest eine erfindungsgemäß ausgeführte Umfangsrille 1,1' aufweist, weisen bezogen auf die Fahrzeuglängsachse eine definierte Außen- und eine definierte Innenschulter auf und sind daher am Fahrzeug entsprechend zu montieren. Wie Fig. 1 und Fig. 2 zeigen, verlaufen die Umfangsrillen 1,1' zwischen Profilpositiven 2, 3, wobei die einen Profilpositive 2 der Außenschulter des Reifens näher sind, was durch die Bezeichnung A verdeutlicht ist, die Profilpositive 3 sind jene, die der Innenschulter (Bezeichnung I) näher sind.

In der nachfolgenden Beschreibung und in den Patentansprüchen beziehen sich die Ausführungen zur geometrischen Gestaltung der Umfangsrillen auf deren jeweiligen Querschnitt. Dabei wird ferner unter "Krümmung" der Kehrwert des Radius jenes Kreises verstanden, welcher dem jeweiligen gekrümmten Verlauf am besten angenähert ist.

Fig. 1 und Fig. 2 zeigen je einen Querschnitt durch eine Umfangsrille 1 bzw. 1' sowie die angrenzenden Bereiche der Profilpositive 2, 3 mit deren zur Laufstreifenoberfläche gehörenden Außenflächen 2a, 3a. Die Umfangsrillen 1,1' sind jeweils durch eine der Außenschulter A näher befindliche Rillenflanke 4, eine der Innenschulter I näher befindliche Rillenflanke 5 und einen die beiden Rillenflanken 4, 5 verbindenden Rillengrund 6 begrenzt.

Jede Umfangsrille 1,1' weist eine über ihre Umfangserstreckung im Wesentlichen gleichbleibende Querschnittsfläche auf und besitzt eine an der Laufstreifenoberfläche in axialer Richtung zwischen den Randkanten ermittelte Breite B₁ von insbesondere 8,0 mm bis 12,0 mm. An ihrer tiefsten Stelle weist jede Umfangsrille 1,1' eine in radialer Richtung ermittelte Tiefe T₁ von vorzugsweise 6,0 mm bis 8,5 mm auf, welche der für den jeweiligen Reifen vorgesehenen maximalen Profiltiefe entspricht.

Die Rillenflanken 4, 5 verlaufen im Querschnitt jeweils gerade und unter einem spitzen Winkel α bzw. β zur radialen Richtung geneigt, sodass die Breite der Umfangsrille 1,1' zu den Außenflächen 2a, 3a größer wird. Die näher zur Außenschulter A befindliche Rillenflanke 4 verläuft unter einem spitzen Winkel α von vorzugsweise 5° bis 20°, die näher zur Innenschulter I befindliche Rillenflanke 5 verläuft unter einem spitzen Winkel β < α von vorzugsweise 0° bis 15°.

Der Rillengrund 6 weist einen zentralen Abschnitt 6a sowie zwei Übergangsabschnitte 6b, 6c auf, welche jeweils seitlich an den zentralen Abschnitt 6a anschließen und bei einer der Rillenflanken 4, 5 enden, wobei der Übergangsabschnitt 6b zur Rillenflanke 4, der Übergangsabschnitt 6c zur Rillenflanke 5 verläuft. Der zentrale Abschnitt 6a ist entlang eines Kreisbogens gekrümmt, wobei der dem Kreisbogen zugrundeliegende Kreis einen Radius r₁ aufweist, welcher dem Zwei- bis Sechsfachen, insbesondere dem Drei- bis Fünffachen der Breite B₁ entspricht. Der näher zur Reifeninnenschulter I befindliche Übergangsabschnitt 6c ist entlang eines Kreisbogens gerundet ausgeführt, wobei der dem Kreisbogen zugrundeliegende Kreis einen Radius r₂ von 2,0 mm bis 4,0 mm, insbesondere von 2,5 mm bis 3,5 mm, aufweist. Der Übergangsabschnitt 6c ist dabei insbesondere derart ausgeführt, dass knickfreie Übergänge zur der an ihn anschließenden Rillenflanke 5 sowie zum Rillengrund 6 vorliegen.

Bei der in Fig. 1 gezeigten Ausführungsvariante ist der näher zur Außenschulter A befindliche Übergangsabschnitt 6b in Form einer Schrägfläche ausgeführt, welche, im Querschnitt betrachtet, unter einem Winkel γ von 35° bis 55°, insbesondere von 40° bis 50°, zur radialen Richtung verläuft und in einer Tiefe T₂ an die Rillenflanke 4 anschließt. Die Tiefe T₂ beträgt 40 % bis 70 %, insbesondere 50 % bis 60 %, der Profiltiefe T₁.

Bei der in Fig. 2 dargestellten Ausführungsvariante ist der näher zur Außenschulter A befindliche Übergangsabschnitt 6b entlang eines Kreisbogens gekrümmt ausgeführt. Der diesem Kreisbogen zugrundeliegende Kreis weist einen Radius r₃ > r₂ von 4,0 mm bis 7,0 mm, insbesondere von 5,0 mm bis 6,0 mm, auf.

### Bezugsziffernliste

- 1: Umfangsrille
- 1': Umfangsrille
- 2: Profilpositiv
- 2a: Außenfläche
- 3: Profilpositiv
- 3a: Außenfläche
- 4: Rillenflanke
- 5: Rillenflanke
- 6: Rillengrund
- 6a: zentraler Abschnitt
- 6b: Übergangsabschnitt
- 6c: Übergangsabschnitt
- a₁: axialer Abstand
- B₁: Breite
- r_{i, i = 1 bis 3}: Radius
- T₁: Profiltiefe
- α, β, γ: Winkel

## Patentansprüche

1. Fahrzeugluftreifen in Radialbauart mit einem asymmetrischen Laufstreifen mit einer der Fahrzeugaußenseite zugeordneten Außenschulter (A) und einer der Fahrzeuginnenseite zugeordneten Innenschulter (I), ferner mit Profilpositiven (2, 3), wie Profilblockreihen oder Profilbändern, sowie mit zumindest einer Umfangsrille (1, 1'), welche an der Laufstreifenoberfläche eine in axialer Richtung zwischen ihren Randkanten ermittelte Breite (B₁) aufweist, wobei jede Umfangsrille (1, 1') von einer ersten, der Außenschulter (A) näher befindlichen Rillenflanke (4), welche unter einem ersten Winkel (α) von 5° bis 20° zur radialen Richtung verläuft, einer zweiten, der Innenschulter (I) näher befindlichen Rillenflanke (5), welche unter einem gegenüber dem ersten Winkel (α) kleineren zweiten Winkel (β) von 0° bis 15° zur radialen Richtung verläuft, sowie einem die Rillenflanken (4, 5) verbindenden Rillengrund (6) begrenzt ist, wobei der Rillengrund (6) einen zentralen Abschnitt (6a) aufweist, welcher, im Querschnitt betrachtet, entlang eines Kreisbogens gekrümmt ist,
**dadurch gekennzeichnet,**
**dass** der Radius (r₁) des Kreisbogens, entlang welchem der zentrale Abschnitt (6a) des Rillengrundes (6) gekrümmt ist, dem Zwei- bis Sechsfachen der Breite (B₁) der Umfangsrille (1, 1') entspricht und dass der Rillengrund (6) je einen Übergangsabschnitt (6b, 6c) zu den Rillenflanken (4, 5) aufweist.

2. Fahrzeugluftreifen nach Anspruch 1, **dadurch gekennzeichnet, dass** der Radius (r₁), des Kreisbogens, entlang welchem der zentrale Abschnitt (6a) gekrümmt ist, dem Drei- bis Fünffachen der Breite (B₁) der Umfangsrille (1, 1') entspricht.

3. Fahrzeugluftreifen nach Anspruch 1 oder 2, **dadurch gekennzeichnet, dass** der zur ersten, der Außenschulter (A) näher befindlichen Rillenflanke (4) verlaufende Übergangsabschnitt (6b), im Querschnitt betrachtet, entlang eines Kreisbogens mit einem Radius (r₃) von 4,0 mm bis 7,0 mm gekrümmt ist.

4. Fahrzeugluftreifen nach Anspruch 3, **dadurch gekennzeichnet, dass** der Radius (r₃) des Kreisbogens des Übergangsabschnittes (6b), welcher zur ersten Rillenflanke (4) verläuft, 5,0 mm bis 6,0 mm beträgt.

5. Fahrzeugluftreifen nach Anspruch 1 oder 2, **dadurch gekennzeichnet, dass** der zur ersten, der Außenschulter (A) näher befindlichen Rillenflanke (4) verlaufende Übergangsabschnitt (6b) eine Schrägfläche ist, welche, im Querschnitt betrachtet, unter einem Winkel (γ) von 35° bis 55° zur radialen Richtung verläuft.

6. Fahrzeugluftreifen nach Anspruch 5, **dadurch gekennzeichnet, dass** der Winkel (γ), unter welchen der Übergangsabschnitt (6b) zur ersten Rillenflanke (4) verläuft, 40° bis 50° beträgt.

7. Fahrzeugluftreifen nach einem der Ansprüche 1 bis 6, **dadurch gekennzeichnet, dass** die erste, zur Außenschulter (A) näher befindliche Rillenflanke (4) bis in eine von der Laufstreifenoberfläche in radialer Richtung ermittelte Tiefe (T₂) reicht, welche 40% bis 70% der Profiltiefe (T₁) entspricht.

8. Fahrzeugluftreifen nach Anspruch 7, **dadurch gekennzeichnet, dass** die Tiefe (T₂), in welche die erste, zur Außenschulter (A) näher befindliche Rillenflanke (4) reicht, 50% bis 60% der Profiltiefe (T₁) beträgt.

9. Fahrzeugluftreifen nach einem der Ansprüche 1 bis 8, **dadurch gekennzeichnet, dass** der zur zweiten, der Innenschulter (I) näher befindlichen Rillenflanke (5) verlaufende Übergangsabschnitt (6c), im Querschnitt betrachtet, entlang eines Kreisbogens mit einem Radius (r₂) von 2,0 mm bis 4,0 mm, insbesondere von 2,5 mm bis 3,5 mm, gekrümmt ist.

10. Fahrzeugluftreifen nach einem der Ansprüche 1 bis 9, **dadurch gekennzeichnet, dass** die Breite (B₁) der Umfangsrille (1, 1') 8,0 mm bis 12,0 mm beträgt.

## Claims

1. Pneumatic vehicle tyre of radial type of construction, having an asymmetrical tread with an outer shoulder (A), assigned to the outside of the vehicle, and an inner shoulder (I), assigned to the inside of the vehicle, furthermore having profile positives (2, 3), such as profile block rows or profile bands, and having at least one circumferential channel (1, 1') which, at the tread surface, has a width (B₁) determined between its marginal edges in an axial direction, wherein each circumferential channel (1, 1') is delimited by a first channel flank (4), which is situated relatively close to the outer shoulder (A) and which runs at a first angle (α) of 5° to 20° with respect to the radial direction, by a second channel flank (5), which is situated relatively close to the inner shoulder (I) and which runs at a second angle (β), smaller than the first angle (α), of 0° to 15° with respect to the radial direction, and by a channel base (6), which connects the channel flanks (4, 5), wherein the channel base (6) has a central section (6a) which, viewed in cross section, is curved along a circular arc,
**characterized**
**in that** the radius (r₁) of the circular arc along which the central section (6a) of the channel base (6) is curved corresponds to two to six times the width (B₁) of the circumferential channel (1, 1'), and in that the channel base (6) has in each case one transition section (6b, 6c) to the channel flanks (4, 5).

2. Pneumatic vehicle tyre according to Claim 1, **characterized in that** the radius (r₁) of the circular arc along which the central section (6a) is curved corresponds to three to five times the width (B₁) of the circumferential channel (1, 1').

3. Pneumatic vehicle tyre according to Claim 1 or 2, **characterized in that** the transition section (6b) which runs to the first channel flank (4) situated relatively close to the outer shoulder (A) is, viewed in cross section, curved along a circular arc with a radius (r₃) of 4.0 mm to 7.0 mm.

4. Pneumatic vehicle tyre according to Claim 3, **characterized in that** the radius (r₃) of the circular arc of the transition section (6b) that runs to the first channel flank (4) amounts to 5.0 mm to 6.0 mm.

5. Pneumatic vehicle tyre according to Claim 1 or 2, **characterized in that** the transition section (6b) that runs to the first channel flank (4) situated relatively close to the outer shoulder (A) is an oblique surface which, viewed in cross section, runs at an angle (γ) of 35° to 55° with respect to the radial direction.

6. Pneumatic vehicle tyre according to Claim 5, **characterized in that** the angle (γ) at which the transition section (6b) runs with respect to the first channel flank (4) amounts to 40° to 50°.

7. Pneumatic vehicle tyre as claimed in one of claims 1 to 6, **characterized in that** the first channel flank (4) situated relatively close to the outer shoulder (A) extends as far as to a depth (T₂), determined in a radial direction from the tread surface, which corresponds to 40% to 70% of the profile depth (T₁).

8. Pneumatic vehicle tyre according to Claim 7, **characterized in that** the depth (T₂) to which the first channel flank (4) situated relatively close to the outer shoulder (A) extends amounts to 50% to 60% of the profile depth (T₁).

9. Pneumatic vehicle tyre according to one of Claims 1 to 8, **characterized in that** the transition section (6c) which runs to the second channel flank (5) situated relatively close to the inner shoulder (I) is, viewed in cross section, curved along a circular arc with a radius (r₂) of 2.0 mm to 4.0 mm, in particular of 2.5 mm to 3.5 mm.

10. Pneumatic vehicle tyre according to one of Claims 1 to 9, **characterized in that** the width (B₁) of the circumferential channel (1, 1') amounts to 8.0 mm to 12.0 mm.

## Revendications

1. Pneumatique de véhicule de construction radiale, comprenant une bande de roulement asymétrique avec un épaulement extérieur (A) associé au côté extérieur du véhicule et un épaulement intérieur (I) associé au côté intérieur du véhicule, et présentant en outre des parties profilées positives (2, 3), telles que des rangées de blocs profilés ou des bandes profilées, ainsi qu'au moins une rainure périphérique (1, 1'), qui présente au niveau de la surface de la bande de roulement une largeur (B₁) mesurée dans la direction axiale entre ses arêtes de bord, chaque rainure périphérique (1, 1') étant limitée par un premier flanc de rainure (4) se trouvant plus près de l'épaulement extérieur (A), s'étendant suivant un premier angle (α) de 5° à 20° par rapport à la direction radiale, un deuxième flanc de rainure (5) se trouvant plus près de l'épaulement intérieur (I), s'étendant suivant un deuxième angle (β) inférieur au premier angle (α), de 0° à 15° par rapport à la direction radiale, ainsi qu'un fond de rainure (6) reliant les flancs de rainure (4, 5), le fond de rainure (6) présentant une portion centrale (6a) qui, vue en section transversale, est courbée le long d'un arc de cercle,
**caractérisé en ce que**
le rayon (r₁) de l'arc de cercle le long duquel la portion centrale (6a) du fond de rainure (6) est courbée correspond à deux à six fois la largeur (B₁) de la rainure périphérique (1, 1') et le fond de rainure (6) présente à chaque fois une portion de transition (6b, 6c) aux flancs de rainure (4, 5).

2. Pneumatique de véhicule selon la revendication 1, **caractérisé en ce que** le rayon (r₁) de l'arc de cercle le long duquel la portion centrale (6a) est courbée correspond à trois à cinq fois la largeur (B₁) de la rainure périphérique (1, 1').

3. Pneumatique de véhicule selon la revendication 1 ou 2, **caractérisé en ce que** la portion de transition (6b) s'étendant vers le premier flanc de rainure (4) se trouvant plus près de l'épaulement extérieur (A), vue en section transversale, est courbée le long d'un arc de cercle ayant un rayon (r₃) de 4,0 mm à 7,0 mm.

4. Pneumatique de véhicule selon la revendication 3, **caractérisé en ce que** le rayon (r₃) de l'arc de cercle de la portion de transition (6b) qui s'étend vers le premier flanc de rainure (4) vaut 5,0 mm à 6,0 mm.

5. Pneumatique de véhicule selon la revendication 1 ou 2, **caractérisé en ce que** la portion de transition (6b) s'étendant vers le premier flanc de rainure (4) se trouvant plus près de l'épaulement extérieur (A), est une surface oblique qui, vue en section transversale, s'étend suivant un angle (γ) de 35° à 55° par rapport à la direction radiale.

6. Pneumatique de véhicule selon la revendication 5, **caractérisé en ce que** l'angle (γ) suivant lequel s'étend la portion de transition (6b) vers le premier flanc de rainure (4) vaut 40° à 50°.

7. Pneumatique de véhicule selon l'une quelconque des revendications 1 à 6, **caractérisé en ce que** le premier flanc de rainure (4) se trouvant plus près de l'épaulement extérieur (A) s'étend jusqu'à une profondeur (T₂) mesurée depuis la surface de la bande de roulement dans la direction radiale, qui correspond à 40 % à 70 % de la profondeur du profilé (T₁).

8. Pneumatique de véhicule selon la revendication 7, **caractérisé en ce que** la profondeur (T₂) suivant laquelle s'étend le premier flanc de rainure (4) se trouvant plus près de l'épaulement extérieur (A) vaut 50 % à 60 % de la profondeur du profilé (T₁).

9. Pneumatique de véhicule selon l'une quelconque des revendications 1 à 8, **caractérisé en ce que** la portion de transition (6c) s'étendant vers le deuxième flanc de rainure (5) se trouvant plus près de l'épaulement intérieur (I), vue en section transversale, est courbée le long d'un arc de cercle ayant un rayon (r₂) de 2,0 mm à 4,0 mm, en particulier de 2,5 mm à 3,5 mm.

10. Pneumatique de véhicule selon l'une quelconque des revendications 1 à 9, **caractérisé en ce que** la largeur (B₁) de la rainure périphérique (1, 1') vaut 8,0 mm à 12,0 mm.
